(19) Europäisches Patentamt
European Patent Office
Office européen des brevets

(11) **EP 1 922 148 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(21) Anmeldenummer: **06777175.8**

(22) Anmeldetag: **08.09.2006**

(51) Int Cl.:
***B01J 35/04*** *(2006.01)*    ***F01N 3/28*** *(2006.01)*

(86) Internationale Anmeldenummer:
**PCT/EP2006/008758**

(87) Internationale Veröffentlichungsnummer:
**WO 2007/028625 (15.03.2007 Gazette 2007/11)**

(54) **VERFAHREN ZUR HERSTELLUNG EINES RINGFÖRMIGEN WABENKÖRPERS, SOWIE RINGFÖRMIGER WABENKÖRPER**

METHOD FOR PRODUCING AN ANNULAR HONEYCOMB BODY, AND ANNULAR HONEYCOMB BODY

PROCEDE POUR REALISER UN ELEMENT ALVEOLAIRE ANNULAIRE ET ELEMENT ALVEOLAIRE ANNULAIRE

(84) Benannte Vertragsstaaten:
**DE ES FR GB IT PL**

(30) Priorität: **09.09.2005 DE 102005043196**

(43) Veröffentlichungstag der Anmeldung:
**21.05.2008 Patentblatt 2008/21**

(73) Patentinhaber: **Emitec Gesellschaft für Emissionstechnologie mbH 53797 Lohmar (DE)**

(72) Erfinder:
• **ZALDUA-MORENO, Naroa 53111 Bonn (DE)**
• **KURTH, Ferdi 53894 Mechernich (DE)**
• **BRÜCK, Rolf 51429 Bergisch Gladbach (DE)**

(74) Vertreter: **Rössler, Matthias KNH Patentanwälte Kahlhöfer Neumann Herzog Fiesser Karlstrasse 76 40210 Düsseldorf (DE)**

(56) Entgegenhaltungen:
WO-A-97/23275    DE-A1- 2 321 378
DE-A1- 2 452 929    DE-A1- 3 506 610

## Beschreibung

Gegenstand der vorliegenden Erfindung ist ein Verfahren zur Herstellung eines ringförmigen Wabenkörpers, sowie ein ringförmiger Wabenkörper. Solche Wabenkörper werden bevorzugt in Abgassystemen von Verbrennungskraftmaschinen, insbesondere in Kraftfahrzeugen, Wasser- und/oder Luftfahrzeugen, beispielsweise als Katalysatorträgerkörper und/oder Partikelfilter eingesetzt.

In zahlreichen Ländern müssen die Emissionen von Verbrennungskraftmaschinen gesetzliche Grenzwerte einhalten, beispielsweise in dem die emittierte Menge einer bestimmten Abgaskomponente einen Grenzwert nicht überschreiten darf. Bei vielen dieser Grenzwerte ist eine Abgasnachbehandlung erforderlich. Hierzu wird das Abgas der Verbrennungskraftmaschine beispielsweise durch einen Katalysatorträgerkörper und/oder einen Partikelfilter geleitet, welcher so beschaffen ist, dass eine Verringerung des Anteils der Abgaskomponente am Abgas erfolgt. Dies kann beispielsweise durch die Ausbildung einer katalytisch aktiven Beschichtung, die beispielsweise katalytisch aktive Edelmetalle umfasst, auf einem Wabenkörper erfolgen.

Je nach vorhandenem Bauraum für Komponenten zur Abgasaufbereitung kann es vorteilhaft sein, einen ringförmigen Wabenkörper einzusetzen. Beispielsweise kann es vorteilhaft sein, einen Abgasstrom zu teilen und jeden Teilstrom einer getrennten Behandlung zu unterziehen. Dies kann beispielsweise dadurch geschehen, dass ein erster Teilstrom durch einen ringförmigen, beispielsweise kreisringförmigen, ersten Wabenkörper und ein zweiter Teilstrom durch einen zweiten Wabenkörper, der beispielsweise im Inneren des kreisringförmigen ersten Wabenkörpers liegt, strömt.

Ringförmige Trägerkörper sind grundsätzlich bekannt. So ist beispielsweise aus der EP-A-0 245 736 ein ringförmiger Wabenkörper mit einer Vielzahl von zwischen einem inneren und einem äußeren Mantelrohr evolventenförmig verlaufenden Lagen bekannt. Ein Verfahren zur Herstellung eines solchen Wabenkörpers ist aus der EP-A-0 322 566 bekannt, bei welchem eine Vielzahl von Lagen mit einem aufwändigen Verfahren an einem inneren Rohr bzw. aneinander und an einem äußeren Rohr befestigt werden. Aus der DE-A-23 21 378 ist ein ringförmiger Wabenkörper bekannt, der aus einem glatten Blechband herstellt wird, welches gefaltet wird und mit einem inneren und äußeren Mantelrohr verbunden ist. Ein solcher Wabenkörper weist eine im Verhältnis zum Volumen und zum Ringquerschnitt ungenügende Oberfläche auf, die mit einer katalytisch aktiven Substanz versehen werden kann. So ist bei gegebenem Ringquerschnitt ein relativ großvolumiger Wabenkörper auszubilden, um eine bestimmte Oberfläche beispielsweise für eine katalytisch aktive Beschichtung zur Verfügung zu stellen. Aus der WO-A-94/01661 wiederum ist ein Herstellungsverfahren bekannt, bei welchem eine glatte und eine gewellte Lage kreisringförmig aufgewickelt, dann an mindestens drei Linien von außen nach innen verformt werden und die dadurch entstehende sternähnliche Struktur gleichsinnig verschlungen wird. Zur Trennung von sonst aufeinander liegenden gewellten Lagen wird hier vorgeschlagen, mindestens einen glatten Lagenabschnitt zwischen die gewellten Lagen einzuschieben. Dies hat einen erhöhten Materialaufwand zur Folge. Aus der DE-A-2452929 ist ebenfalls ein Verfahren zum Herstellen eines Wabenkörpers bekannt, bei dem zunächst eine einzelne Lage mit ebenen Bereichen und Erhebungen aufweisenden Bereichen geformt wird. Die Lage wird anschließend so über sich selbst umgelegt, dass ein Wabenkörper entsteht.

Ausgehend von diesem Stand der Technik liegt der vorliegenden Erfindung die Aufgabe zugrunde, ein Verfahren zur Herstellung eines ringförmigen Wabenkörpers anzugeben, welches einfach und mit geringem Materialaufwand durchzuführen ist, wobei der ringförmige Wabenkörper eine genügend große Oberfläche pro Volumen des Wabenkörpers und pro Ringquerschnitt aufweist. Weiterhin soll ein entsprechender Wabenkörper vorgeschlagen werden.

Diese Aufgaben werden gelöst durch ein Verfahren zur Herstellung eines Wabenkörpers, sowie einen Wabenkörper mit den Merkmalen der unabhängigen Ansprüche. Die jeweiligen abhängigen Ansprüche sind auf vorteilhafte Weiterbildungen gerichtet.

Gemäß dem erfindungsgemäßen Verfahren zur Herstellung eines Wabenkörpers, welcher einen radialen Teilbereich mit für ein Fluid durchströmbaren Kanälen aufweist, wobei der Teilbereich ringförmig ist, wird der Wabenkörper aus einer einzigen metallischen Lage ausgebildet, wobei das Verfahren zumindest die folgenden Schritte aufweist:

- Ausbilden von im wesentlichen glatten und strukturierten Abschnitten der metallischen Lage, wobei die im wesentlichen glatten Abschnitte mindestens eine erste Abschnittslänge und die strukturierten Abschnitte mindestens eine von der ersten Abschnittslänge verschiedene zweite Abschnittslänge aufweisen;
- Falten der Abschnitte aufeinander, dass die im wesentlichen glatten und strukturierten Abschnitte einander abwechseln;
- Befestigen der einen metallischen Lage in mindestens einem Befestigungspunkt an einem äußeren Mantelrohr;
- evolventenförmiges Verwinden der Abschnitte in dem Mantelrohr.

Unter einem ringförmigen Teilbereich wird ein außen von einer äußeren Begrenzungslinie umgebener Teilbereich verstanden, der im Inneren einen offenen, das heißt nicht mit Kanälen versehenen Bereich aufweist, der von einer inneren Begrenzungslinie umgeben ist, wobei die äußere und die innere Begrenzungslinie bevorzugt im wesentlichen parallel zueinander laufen, einander insbesondere nicht schneiden. Insbesondere können die Begrenzungslinien im Wesentlichen die geometrische Form eins Kreises, einer Ellipse, eines Rechtecks, bei dem zwei einander gegenüberliegende Seiten durch entsprechende Halbkreise ersetzt sind, und/oder eines Polygons aufweisen. Insbesondere wird unter einem ringförmigen Bereich ein kreisringförmiger Bereich verstanden. Einander abwechseln bedeutet insbesondere, dass ein im Wesentlichen glatter, nicht die Lage begrenzender Abschnitt auf beiden Seiten benachbarte strukturierte Abschnitte aufweist. Gleichermaßen bedeutet dies insbesondere, dass ein nicht die Lage begrenzender strukturierter Abschnitt zwei benachbarte im Wesentlichen glatte Abschnitte aufweist. Ein strukturierter Abschnitt weist Strukturen auf, die später zumindest zum Teil die Wände der Kanäle bilden. Insbesondere ist eine Struktur gemeint, die eine Strukturamplitude und eine Strukturwiederhollänge aufweist. Unter einem im wesentlichen glatten Abschnitt wird ein Abschnitt verstanden, der glatt ist, also beispielsweise nur im Rahmen des Falt- und eines Verwindungs- und/oder Aufwicklungsprozesses verformt wird, oder aber der nur Mikrostrukturen aufweist, deren Strukturamplitude kleiner ist als die Strukturamplitude der strukturierten Abschnitte. Diese Mikroshukturierungen können insbesondere so ausgerichtet sein, dass im fertig gestellten Wabenkörper die Richtung, in die sich die Mikrostrukturierungen erstrecken und die Richtung, in denen sich die Strukturen der strukturierten Abschnitte erstrecken, nicht übereinstimmen.

Die Strukturen umfassen insbesondere Wellungen. Diese Wellungen können insbesondere durch eine Wellwalze eingebracht werden, allerdings können erfindungsgemäß beispielsweise auch Prägeverfahren zum Einbringen der Strukturierungen in die entsprechenden Abschnitte der Lage eingesetzt werden. Bevorzugt umfasst die Lage eine Vielzahl von Abschnitten. Bevorzugt wird der Wabenkörper aus einer bis sechs Lagen ausgebildet. Besonders bevorzugt ist hierbei die Ausbildung aus einer einzigen Lage.

Unter einer metallischen Lage wird insbesondere eine dünne metallische Folie verstanden, bevorzugt einer Dicke von 80 Mikrometern ($\mu$m) oder weniger, besonders bevorzugt einer Dicke von 30 bis 60 $\mu$m oder auch 40 bis 50 $\mu$m oder sogar von 25 $\mu$m oder weniger. Weiterhin kann eine metallische Lage auch ganz oder teilweise aus einem metallischen, für ein Fluid zumindest zum Teil durchströmbaren, insbesondere porösen Werkstoff ausgebildet sein. Hierbei kann die Lage insbesondere zumindest zum Teil aus einem porösen metallischen Faser- und/oder Sinterwerkstoff ausgebildet sein. Grundsätzlich ist es bevorzugt, die metallische Lage aus einem hochtemperaturfesten, korrosionsfesten Material auszubilden, das insbesondere geeignet ist, den Bedingungen, beispielsweise den hohen Temperaturen im Abgassystemen von Verbrennungskraftmaschinen, bevorzugt auch im motomahen Einsatz, standzuhalten.

Durch die Verbindung der mindestens einen metallischen Lage mit dem äußeren Mantelrohr in mindestens einem Befestigungspunkt wird insbesondere dann, wenn eine Mehrzahl von Befestigungspunkten vorliegt, eine feste Verbindung zwischen Lage und äußerem Mantelrohr geschaffen. Insbesondere kann auf ein inneres Mantelrohr, mit welchem die Lage verbunden ist, verzichtet werden. Unter einem Befestigungspunkt wird hier eine punktförmige Verbindung, aber auch eine flächige Verbindung verstanden. Insbesondere liegt eine Verbindung in zumindest einem am äußeren Mantelrohr anliegenden Teilbereich der Lage verstanden.

Die Verbindung erfolgt insbesondere durch stoffschlüssige Verfahren, beispielsweise einem Löt- und/oder Schweißverfahren. Unter einem Lötverfahren wird hier insbesondere ein Hochtemperaturvakuumlötverfahren verstanden. Alternativ oder zusätzlich ist auch eine kraft- und/oder formschlüssige Verbindung zum äußeren Mantelrohr möglich und erfindungsgemäß, insbesondere auch eine selbsthemmende Verbindung. Eine solche auf einer mechanischen Verhakung beruhende Verbindung kann auch zwischen den Abschnitten der Lage oder zwischen benachbarten Lagen vorteilhaft eingesetzt werden.

Im Vergleich zu aus dem Stand der Technik bekannten ringförmigen Wabenkörper weist der erfindungsgemäß hergestellte und auch der erfindungsgemäße Wabenkörper eine große beispielsweise für eine Beschichtung zur Verfügung stehende Oberfläche pro Ringquerschnitt und/oder pro Volumen des Wabenkörpers auf. Im Vergleich zu Herstellungsverfahren, bei denen eine Zwischenlage beispielsweise als glatte Lage eingebracht werden muss, ist der Materialaufwand deutlich geringer, zudem ist das Herstellungsverfahren einfacher.

Die Strukturen der strukturierten Abschnitte können insbesondere durch Walzen mit einer Wellwalze in die Lage eingebracht werden. Bevorzugt ist hierbei eine Walze, bei der nur eine Hälfte als Wellwalze ausgebildet ist. Hierdurch kann eine Lage hergestellt werden, die glatte und gewellte Abschnitte aufweist. Hierbei kann der Teil der Walze, der nicht als Wellwalze ausgebildet ist, insbesondere mit einer Beschichtung, beispielsweise einer gummierten Beschichtung, versehen werden, mit der ein Verformen der Abschnitte vermieden wird. Weiterhin ist es erfindungsgemäß möglich, bei Herstellung der strukturierten Abschnitte die Lage einem Walzvorgang mit einer gewellten Walze zu unterziehen, die dann, wenn ein im wesentlichen glatter Abschnitt auszubilden ist, von der Lage abgehoben wird.

Bevorzugt ist eine Ausgestaltung, bei der die im wesentlichen glatten Abschnitte im wesentlichen alle eine identische erste Abschnittslänge und die strukturierten Abschnitte im wesentlichen alle eine identische zweite Abschnittslänge erhalten. Nach Faltung der Abschnitte weist die Lage einen Parallelogrammförmigen Querschnitt auf, der insbesondere so gestaltet werden kann, dass ein ringförmiger Wabenkörper ohne ein Verdrehen oder Verwinden aufgebaut werden kann. Bevorzugt ist hierbei, dass die erste Abschnittslänge größer als die zweite Abschnittslänge ist, insbesondere um etwa 1 bis 10%, bevorzugt um etwa 3 bis 7%, insbesondere um im wesentlichen 5%.

Gemäß einer weiteren vorteilhaften Ausgestaltung des erfindungsgemäßen Verfahrens ist die eine Lage mit einem inneren Mantelrohr verbunden, wobei bei der Herstellung eine relative Verdrehung der Mantelrohre zueinander erfolgt.

Insbesondere kann hierbei das innere Mantelrohr gegen das äußere Mantelrohr gedreht werden oder eine gegensinnige Drehung beider Mantelrohre gleichzeitig und/oder nacheinander erfolgen.

Gemäß einer weiteren vorteilhaften Ausgestaltung des erfindungsgemäßen Verfahrens ist die Verbindung zwischen der einen Lage und innerem Mantelrohr lösbar.

Bevorzugt kann hier eine form- und/oder kraftschlüssige Verbindung zwischen der mindestens einen Lage und dem inneren Mantelrohr erfolgen. Bevorzugt ist also eine Verfahrensführung, bei der das innere Mantelrohr nur als Verwindungshilfe eingebracht wird und nach dem Verwindungsvorgang, also beispielsweise einer Drehung des inneren gegen das äußere Mantelrohr, wieder entfernt wird. Insbesondere erfolgt das Entfernen des inneren Mantelrohres nach Ausbildung einer stoffschlüssigen Verbindung zwischen den Lagen. Unter einer stoffschlüssigen Verbindung wird hier insbesondere eine Schweiß- und/oder eine Lötverbindung, bevorzugt eine Hochtemperaturlötverbindung, verstanden.

Gemäß einer weiteren vorteilhaften Ausgestaltung des erfindungsgemäßen Verfahrens wird nach dem Verdrehen das innere Mantelrohr entfernt.

Gemäß einer weiteren vorteilhaften Ausgestaltung des erfindungsgemäßen Verfahrens sind die Abschnitte der Lage durch Faltlinien getrennt, wobei jede zweite Faltlinie auf einer Seite der Lage liegt und wobei mindestens eine der letztgenannten Faltlinien mindestens einen Befestigungspunkt umfasst.

Eine Faltlinie bezeichnet also jene Linie, entlang der die Lage gefaltet wurde. Zwischen zwei benachbarten Abschnitten liegt folglich eine Faltlinie. Jede zweite Faltlinie liegt auf einer Seite der Lage nach Durchführung der gesamten Faltung. Hierbei werden die Faltlinien der Lage, die nach Herstellung des Wabenkörpers nach außen weisen, als äußere Faltlinien bezeichnet, während die Faltlinien der Lage, die nach Herstellung des Wabenkörpers nach innen weisen, als innere Faltlinien bezeichnet werden. Bevorzugt ist jede äußere Faltlinie am äußeren Mantelrohr befestigt, insbesondere stoffschlüssig mit diesem verbunden. Auch hier kommen insbesondere Löt- und/oder Schweißverfahren, bevorzugt Hartlötverfahren zum Einsatz. Die Verbindung kann dabei jeweils über die gesamte Länge des Wabenkörpers oder auch nur in Teilbereichen oder auch nur punktförmig in einem Befestigungspunkt ausgebildet werden.

Wenn ein inneres Mantelrohr dauerhaft, dass heißt insbesondere nicht nur während des Herstellungsvorgangs, ausgebildet ist, kann auch in vorteilhafter Weise eine Befestigung der mindestens einen Lage am inneren Mantelrohr, insbesondere mittels eines stoffschlüssigen Verbindungsverfahrens, wie insbesondere einem Löt- und/oder Schweißverfahren, insbesondere einem Hochtemperaturlötprozess, ausgebildet sein.

Gemäß einer weiteren vorteilhaften Ausgestaltung des erfindungsgemäßen Verfahrens die Strukturen im wesentlichen periodisch in die Lage eingebracht werden, wobei die Strukturen eine Strukturwiederhollänge aufweisen, wobei die Strukturwiederhollänge an mindestens einer Stelle der Lage vergrößert wird.

Die Strukturwiederhollänge bezeichnet insbesondere den Abstand eines Punktes einer Struktur bis zu einem entsprechenden Punkt in der benachbarten Struktur. Bei einer streng periodischen Struktur würde die Strukturwiederhollänge der Periode der Struktur entsprechen. Eine Verlängerung der Strukturwiederhollänge kann insbesondere dadurch erreicht werden, dass eine Struktur im Vergleich zu anderen Strukturen in der Lage gedehnt wird oder eine Struktur weggelassen wird. Insbesondere dann, wenn der strukturierte Abschnitt gewellt wird, kann ein Teil einer Periode oder eine Periode der Wellung weggelassen werden.

Diese vorteilhafte Ausgestaltung kann auch unabhängig von dem erfindungsgemäßen Verfahren verwirklicht werden. Vorteilhaft ist also ein Verfahren zur Herstellung eines ringförmigen Wabenkörpers, bei dem mindestens eine zumindest teilweise mit Strukturen mit mindestens einer Strukturwiederhollänge strukturierte Lage und gegebenenfalls mindestens eine im wesentlichen glatte Lage so aufgewickelt oder verwunden wird, dass ein ringförmiger Bereich mit für ein Fluid durchströmbaren Kanälen entsteht, wobei mindestens zwei Strukturwiederhollängen unterschiedlich sind. Unter einer zumindest teilweise strukturierten Lage wird insbesondere eine Lage verstanden, die in Teilbereichen strukturiert und in Teilbereichen nicht strukturiert ist oder auch einen Aufbau aus mindestens einer strukturierten und mindestens einer im Wesentlichen glatte Lage. Unter dem Aufwickeln bzw. Verwinden mindestens einer solchen Lage wird insbesondere eine spiralförmige Aufwicklung dieser Lagen verstanden oder auch ein Stapeln mindestens einer Lage und ein anschließendes gleich- oder gegensinniges Verwinden mindestens eines Stapels. Insbesondere wird unter dem Begriff der unterschiedlichen Strukturwiederhollänge eine Ausbildung des Verfahrens verstanden, bei der grundsätzlich eine Struktur mit einer Strukturwiederhollänge und einer Strukturierungsamplitude in die Lage eingebracht wird, wobei entweder mindestens eine Struktur beispielsweise gedehnt wird, wobei also eine lokal unterschiedliche Periode bei periodischen Strukturen entsteht und/oder mindestens eine Stelle, an der eine Struktur nicht ausgebildet wird. Durch letzteres entsteht eine Lücke in den Strukturen, grundsätzlich bleibt also die Periode bei periodischen Strukturen gleich, jedoch ändert sich die Strukturwiederhollänge wie oben definiert.

Dieses Verfahren kann also unabhängig von dem oben skizzierten erfindungsgemäßen Verfahren aus einer Lage mit gefalteten Abschnitten durchgeführt werden. Insbesondere kann das hier beschriebene Verfahren auch mit aus dem Stand der Technik bekannten Verfahren zur Herstellung von insbesondere ringförmigen Wabenkörpern durchgeführt werden.

Das hier beschriebene Verfahren mit den unterschiedlichen Strukturwiederhollängen löst zudem eine weitere Aufgabe, nämlich die, ein Verfahren zur Herstellung eines Wabenkörpers sowie einen Wabenkörper vorzuschlagen, welcher insbesondere ringförmig ist und welcher geeignet ist, die bei einer thermischen Aufheizung von innen oder von außen entstehenden Druckkräfte aufzunehmen.

In vorteilhafter Weise erlauben es die weggelassenen und/oder gedehnten Strukturen, dass Druckkräfte im Wabenkörper kompensiert werden können. Im Prinzip arbeitet die Lage dann als eine Art Druckfeder, bei der der Bereich der ausgelassenen Struktur und/oder der gedehnten Struktur unter Druck verformt werden kann. Bevorzugt werden die Strukturwiederhollängen so verändert, dass nach Formung des Wabenkörpers jeder Radius des Wabenkörpers mindestens einen Bereich mit einer verlängerten Struktwwiederhollänge aufweist. Dies ermöglicht in vorteilhafter Weise eine im wesentlichen radial gleichförmige Aufnahme von Druckspannungen im Wabenkörper.

Alternativ und/oder zusätzlich zu der vergrößerten Strukturwiederhollänge kann in mindestens einen strukturierten Abschnitt mindestens eine Ausnehmung eingebracht werden.

Diese Ausnehmung ist bevorzugt senkrecht zur Wiederholungsrichtung der Strukturierungen, also bevorzugt in Längsrichtung des Wabenkörpers ausgerichtet. Es handelt sich hierbei bevorzugt um einen Schlitz, welcher in die Lage eingebracht wird. Auch dieser Schlitz kann in vorteilhafter Weise zur Kompensation der thermischen Ausdehnung des ringförmigen Wabenkörpers dienen. Bevorzugt werden die Ausnehmungen so ausgebildet, dass nach Formung des Wabenkörpers jeder Radius des Wabenkörpers mindestens einen Bereich mit einer verlängerten Strukturwiederhollänge und/oder einer Ausnehmung aufweist. Dies ermöglicht in vorteilhafter Weise eine im wesentlichen radial gleichförmige Aufnahme von Druckspannungen im Wabenkörper..

Die mindestens eine Ausnehmung kann insbesondere durch Stanzen, Lochen und/oder Schneiden in die Lage eingebracht werden.

Gemäß einer weiteren vorteilhaften Ausgestaltung des erfindungsgemäßen Verfahrens werden Ausnehmungen so in glatte und strukturierte Abschnitte eingebracht, dass nach der Faltung ein zusammenhängender Hohlraum entsteht.

In diesen Hohlraum kann insbesondere ein Messfühler, bevorzugt eine Lambdasonde eingebracht werden.

Gemäß einer weiteren vorteilhaften Ausgestaltung des erfindungsgemäßen Verfahrens wird ein die Lage begrenzender strukturierter Abschnitt kürzer ausgebildet als die übrigen Abschnitte.

Gemäß einer weiteren vorteilhaften Ausgestaltung des erfindungsgemäßen Verfahrens erfolgt eine Befestigung der Lage in den Befestigungspunkten mittels eines stoffschlüssigen Verfahrens.

Unter einem stoffschlüssigen Verfahren wird insbesondere ein Schweiß- und/oder Lötverfahren verstanden. Bevorzugt ist hierbei ein Hochtemperaturlötverfahren, welches bei hohen Temperaturen eine hartgelötete Verbindung erzeugt. Bevorzugt wird ein solches Lötverfahren eingesetzt, welches gewährleistet, dass die Verbindung bei üblichen Temperaturen im Abgassystem von Verbrennungskraftmaschinen, insbesondere auch im motornahen Einsatz, haltbar ist.

Gemäß einer weiteren vorteilhaften Ausgestaltung des erfindungsgemäßen Verfahrens wird zumindest in Teilbereichen des Wabenkörpers mindestens eine der folgenden Verbindungen stoffschlüssig erzeugt:

a) eine Verbindung der Lage mit einem inneren Mantelrohr;
b) eine Verbindung der Lage mit einem äußeren Mantelrohr;
c) eine Verbindung der Lage mit sich selbst und
d) eine Verbindung einer Lage mit einer benachbarten Lage.

Unter einer Verbindung gemäß c) wird insbesondere eine Verbindung eines Abschnittes mit einem anderen Abschnitt, bevorzugt einem benachbarten Abschnitt, insbesondere in Teilbereichen der jeweiligen Abschnitte, verstanden. Sämtliche Verbindungen a), b), c) und d) können in Teilbereichen der Lage oder über die gesamte Länge der Lage erfolgen. Die Verbindungen gemäß a) und b) können nicht nur im Bereich der Faltlinien ausgebildet werden, sondern können beispielsweise auch im Bereich eines zumindest bereichsweise am Mantelrohr anliegenden im wesentlichen glatten und/oder strukturierten Abschnittes erzeugt werden. Bevorzugt ist hierbei die Verbindung von Lage und innerem und/oder äußerem Mantelrohr im bereich von Strukturextrema der strukturierten Bereiche. Die Anbindung kann jeweils über die gesamte Länge des Wabenkörpers erfolgen oder auch nur in einem oder mehreren Teilbereichen der Länge.

Gemäß einer weiteren vorteilhaften Ausgestaltung des erfindungsgemäßen Verfahrens wird zumindest ein Teil einer Lage aus einer metallischen Folie ausgebildet.

So kann insbesondere eine dünne Blechfolie zum Einsatz kommen. Bevorzugt ist auch eine Ausbildung, bei der in einer Längsrichtung, die der Durchströmungsrichtung des Wabenkörpers entspricht, ein Teilbereich als Folie und ein anderer Teilbereich als zumindest teilweise für ein Fluid durchströmbare Bereich ausgebildet ist.

Gemäß einer weiteren vorteilhaften Ausgestaltung des erfindungsgemäßen Verfahrens wird zumindest ein Teil einer Lage aus einem metallischen, zumindest teilweise für ein Fluid durchströmbaren Material ausgebildet.

Insbesondere wird hierunter ein poröses metallisches Material, insbesondere ein Fasermaterial und/oder ein poröser metallischer Sinterwerkstoff verstanden.

Gemäß einem weiteren Aspekt der Erfindung wird ein Wabenkörper vorgeschlagen, welcher einen radialen Teilbereich mit für ein Fluid durchströmbaren Kanälen aufweist, wobei der Teilbereich ringförmig ist, wobei der Wabenkörper mit einer einzigen metallischen Lage ausgebildet ist, die in mindestens einem Befestigungspunkt an einem äußeren Mantelrohr befestigt ist, wobei die metallische Lage im wesentlichen glatte und strukturierte Abschnitte aufweist, die abwechselnd aufeinander gefaltet sind, dadurch gekennzeichnet, dass die im wesentlichen glatten Abschnitte mindestens eine erste Abschnittslänge und die strukturierten Abschnitte mindestens eine von der ersten Abschnittslänge verschiedene zweite Abschnittslänge aufweisen, und wobei jeder einzelne Abschnitt eine im wesentlichen evolventenförmige Krümmung aufweist.

Gemäß einer vorteilhaften Ausgestaltung des erfindungsgemäßen Wabenkörpers weisen die strukturierten Abschnitte nur eine Strukturamplitude auf.

Dies gilt insbesondere dann, wenn das äußere Mantelrohr und gegebenenfalls das innere Mantelrohr im Wesentlichen kreisförmig sind. Dann folgt die Krümmung jedes einzelnen Abschnitts im Wesentlichen insbesondere einer Evolvente eines Kreises. Die Evolvente eines Kreises lässt sich in einer x, y-Ebene ausdrücken wie folgt:

$$x = a \cos \phi + a\, \phi \sin \phi, \ y = a \sin \phi - a\, \phi \cos \phi$$

Der Wert a bezeichnet hierbei den Radius des inneren Kreises bzw. des inneren Mantelrohres.

Gemäß einer weiteren vorteilhaften Ausgestaltung des erfindungsgemäßen Wabenkörpers ist ein inneres Mantelrohr ausgebildet, mit welchem die eine Lage zumindest in Teilbereichen verbunden ist.

Gemäß einer weiteren vorteilhaften Ausgestaltung des erfindungsgemäßen Wabenkörpers sind die Abschnitte der Lage durch Faltlinien getrennt, wobei jede zweite Faltlinie auf einer Seite der Lage liegt und wobei mindestens eine der letztgenannten Faltlinien zumindest in Teilbereichen mit dem äußeren Mantelrohr verbunden ist.

Es liegt also eine im wesentlichen zick-zack-förmig gefaltete Lage vor, wobei - außer für die die Lage jeweils begrenzenden Abschnitte - jeweils einem im Wesentlichen glatten Abschnitt zwei strukturierte Abschnitte und umgekehrt benachbart sind.

Gemäß einer weiteren vorteilhaften Ausgestaltung des erfindungsgemäßen Wabenkörpers weisen die Strukturen der strukturierten Abschnitte eine Strukturwiederhollänge auf, wobei die Strukturwiederhollänge an mindestens einer Stelle der Lage vergrößert wird.

Die Vergrößerung einer Strukturwiederhollänge an mindestens einer Stelle einer Lage schafft eine Zone im Wabenkörper die Druckspannungen aufnehmen kann. In dieser Zone ist dann eine Verformung der in diesem Bereich entweder anders strukturierten Struktur oder nicht vorhandenen Struktur möglich.

Das Merkmal, dass die Strukturen der strukturierten Abschnitte eine Strukturwiederhollänge aufweisen, wobei die Strukturwiederhollänge an mindestens einer Stelle einer Lage vergrößert wird, kann auch in Alleinstellung in einem beliebigen, insbesondere ringförmigen Wabenkörper umfassend metallische Lagen verwirklicht werden.

Es ist also vorteilhaft, einen Wabenkörper auszubilden, welcher metallische Lagen umfasst, die zumindest teilweise strukturiert sind, wobei die Strukturen eine Strukturwiederhollänge aufweisen, wobei die Strukturwiederhollänge an mindestens einer Stelle vergrößert wird.

Bevorzugt eignet sich dies auch für einen evolventenförmig aufgebauten Ringkatalysator mit einem insbesondere kreisringförmigen Abschnitt mit für ein Fluid durchströmbaren Kanälen. Unter zumindest teilweise strukturierten Lagen wird ein Aufbau verstanden, bei dem Lagen ausgebildet sind, die teilweise strukturiert sind oder bei denen mehrere Lagen Verwendung finden, von denen ein Teil strukturiert und ein Teil im Wesentlichen glatt ist.

Gemäß einer vorteilhaften Ausgestaltung des erfindungsgemäßen Wabenkörpers weist ein mindestens ein strukturierter Abschnitt mindestens eine Ausnehmung auf.

Auch die Ausnehmung in einem strukturierten Abschnitt bzw. in einer strukturiertten Lage kann in vorteilhafter Weise zur Aufnahme von Druckspannungen beim inhomogenen Erwärmen des Wabenkörpers dienen. Auch dieses Merkmal kann in Alleinstellung in vorteilhafter Weise verwirklicht werden und alternativ und/oder zusätzlich zu einer an mindestens einer Stelle vergrößerten Strukturwiederhollänge ausgebildet sein.

Gemäß einer weiteren vorteilhaften Ausgestaltung des erfindungsgemäßen Wabenkörpers weisen glatte und strukturierte Abschnitte Ausnehmungen auf, die einen zusammenhängenden Hohlraum bilden.

Dieser Hohlraum kann insbesondere zur Aufnahme eines Messfühlers, insbesondere einer Lambdasonde, dienen.

Gemäß einer weiteren vorteilhaften Ausgestaltung des erfindungsgemäßen Wabenkörpers liegt in den Befestigungspunkten eine stoffschlüssige Verbindung vor.

Unter stoffschlüssiger Verbindung wird hier insbesondere die Ausbildung einer Löt- und/oder Schweißverbindung, insbesondere einer Hartlötverbindung bei relativ hohen Temperaturen verstanden.

Gemäß einer weiteren vorteilhaften Ausgestaltung des erfindungsgemäßen Wabenkörpers umfasst mindestens eine der folgenden Verbindungen eine stoffschlüssige Verbindung:

a) eine Verbindung der Lage mit einem inneren Mantelrohr,
b) eine Verbindung der Lage mit einem äußeren Mantelrohr,
c) eine Verbindung der Lage mit sich selbst und
d) eine Verbindung einer Lage mit einer benachbarten Lage.

Jede der Verbindungen a), b), c) und/oder d) kann auch in einem Teilbereich einer Lage ausgebildet sein. Auch hier wird unter einer stoffschlüssigen Verbindung insbesondere die Ausbildung einer Lötverbindung und/oder einer Schweißverbindung verstanden.. Die Verbindungen gemäß a) und b) können nicht nur im Bereich der Faltlinien ausgebildet sein, sondern können beispielsweise auch im Bereich eines zumindest bereichsweise am Mantelrohr anliegenden im wesentlichen glatten und/oder strukturierten Abschnittes vorhanden sein. Bevorzugt ist hierbei die Verbindung von Lage und innerem und/oder äußerem Mantelrohr im bereich von Strukturextrema der strukturierten Bereiche. Die Anbindung kann jeweils über die gesamte Länge des Wabenkörpers erfolgen oder auch nur in einem oder mehreren Teilbereichen der Länge.

Gemäß einer weiteren vorteilhaften Ausgestaltung des erfindungsgemäßen Wabenkörpers umfasst zumindest ein Teil einer Lage eine metallische Folie.

Insbesondere werden hierunter dünne Blechfolien mit einer Dicke von 80 $\mu$m oder weniger verstanden.

Gemäß einer weiteren vorteilhaften Ausgestaltung des erfindungsgemäßen Wabenkörpers ist zumindest ein Teil einer Lage aus einem metallischen zumindest teilweise für ein Fluid durchströmbaren Material ausgebildet.

Insbesondere handelt es sich hierbei um poröse metallische Materialien. Beispiele für solche Materialien sind poröse Fasermaterialien und/oder Sintermaterialien.

Die für das erfindungsgemäße Verfahren offenbarten Details und Vorteile sind in gleicher Weise auf den erfindungsgemäßen Wabenkörper anwend- und übertragbar und umgekehrt. Der erfindungsgemäße Wabenkörper kann insbesondere nach dem erfindungsgemäßen Verfahren hergestellt werden.

Im Folgenden soll die Erfindung an Hand der beigefügten Figuren näher erläutert werden, ohne dass die Erfindung auf die dort gezeigten Details und Vorteile beschränkt wäre. Es zeigen schematisch:

Fig. 1  ein Beispiel für eine Lage für einen erfindungsgemäßen Wabenkörper;

Fig. 2  eine bereits gefaltete Lage;

Fig. 3  eine perspektivische Ansicht eines Ausschnitts einer Lage eines erfin- dungsgemäßen Wabenkörpers;

Fig. 4  einen erfindungsgemäßen Wabenkörper im Querschnitt;

Fig. 5  einen Ausschnitt aus einem erfindungsgemäßen Wabenkörper;

Fig. 6  einen Ausschnitt aus einem weiteren Ausführungsbeispiel eines erfin- dungsgemäßen Wabenkörpers;

Fig. 7  einen Ausschnitt aus einem weiteren Ausführungsbeispiel einer Lage eines erfindungsgemäßen Wabenkörpers;

Fig. 8  einen Ausschnitt einer Lage mit glatten und strukturierten Abschnitten;

Fig. 9  einen Ausschnitt aus einem weiteren Ausführungsbeispiel eines erfin- dungsgemäßen Wabenkörpers;

Fig. 10  einen Abschnitt aus einem weiteren Ausführungsbeispiel eines erfin- dungsgemäßen Wabenkörpers; und

Fig. 11  schematisch eine Definition eines Anlagewinkels.

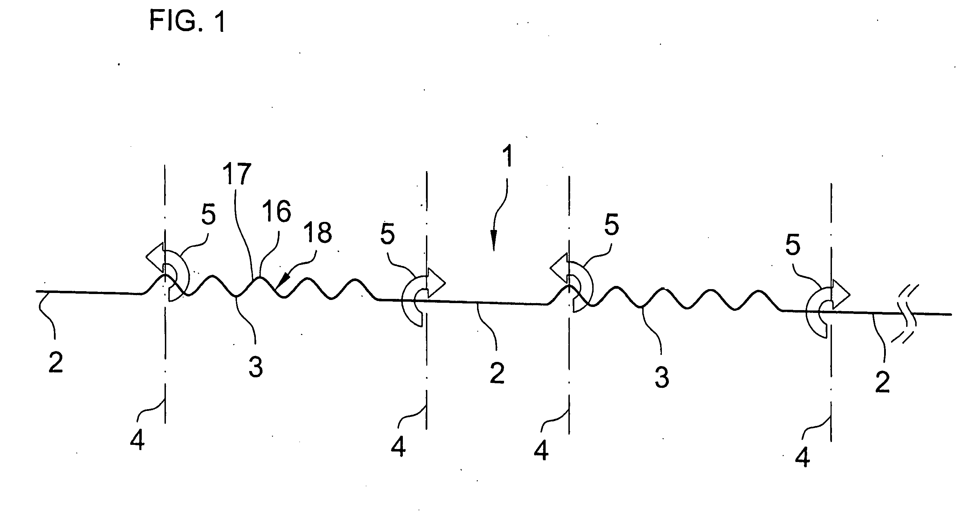

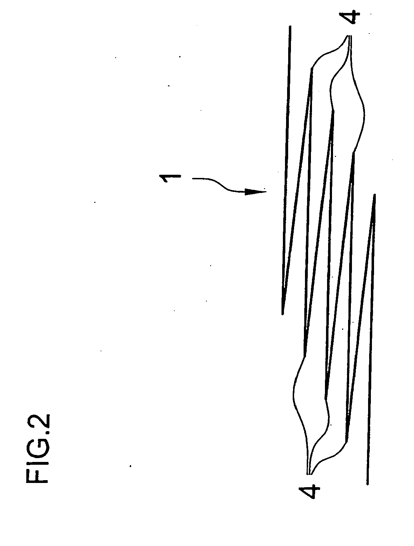

Fig. 1 zeigt schematisch eine Lage 1, die in einem erfindungsgemäßen Verfahren zur Herstellung eines Wabenkörpers eingesetzt werden kann. Die Lage 1 weist eine Mehrzahl von glatten Abschnitten 2 und strukturierten Abschnitten 3 auf, die einander abwechseln. Die Abschnitte 2, 3 sind jeweils durch Faltlinien 4 getrennt. Eine Faltung erfolgt jeweils in einer Faltrichtung, wie sie durch die Pfeile 5 angedeutet ist. Hierdurch entsteht eine gefaltete Lage, wie sie in Fig. 2 angedeutet ist.

Durch das Falten der Lage 1 werden die Abschnitte 2, 3 jeder Lage 1 durch Faltlinien 4 getrennt. Jede zweite Faltlinie 4 liegt jeweils auf einer Seite der Lage 1. Mit den auf einer Seite der Lage 1 liegenden Faltlinien 4 ist die Möglichkeit gegeben, eine Befestigung an einem inneren und/oder äußeren Mantelrohr vorzunehmen. Hierbei erfolgt eine Verbindung in zumindest einen Teilbereich zumindest eines Teils der Faltlinien 4. Alternativ oder zusätzlich ist die Ausbildung einer Verbindung in der Nähe der Faltlinien 4 möglich.

Die Lage 1 weist mindestens einen Befestigungspunkt 16 auf, in dem ein Abschnitt 2, 3 mit einem benachbarten Abschnitt 3, 2 oder mit einem äußeren 7 oder inneren Mantelrohr 8 befestigt ist. Insbesondere kann der Befestigungspunkt 16 sich über zumindest einen Teilbereich einer Kuppe 17 einer Strukturierung 18 erstrecken. Bevorzugt ist die Ausbildung einer stoffschlüssigen Verbindung, insbesondere einer Schweiß- und/oder Hartlötverbindung.

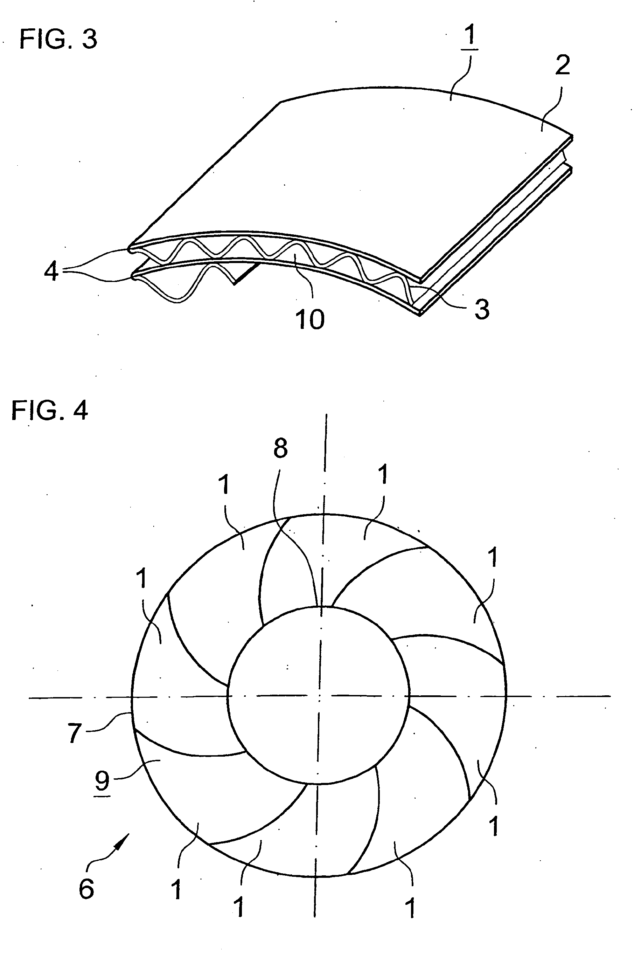

Fig. 3 zeigt schematisch einen Ausschnitt einer Lage 1 in einer perspektivischen Ansicht. Diese weist glatte Abschnitte 2 und gewellte Abschnitte 3 auf, die durch Faltlinien 4 getrennt sind. Die strukturierten 3 und glatten Abschnitte 2 bilden nach dem Falten Kanäle 10. Diese Kanäle sind für ein Fluid durchströmbar.

Fig. 4 zeigt schematisch einen erfindungsgemäßen Wabenkörper 6 im Querschnitt. Dieser ist erfindungsgemäß aus sechs Lagen 1 aufgebaut, die mit einem Teil der entsprechenden Faltlinien 4 zumindest in Teilbereichen an einem äußeren Mantelrohr 7 und mit einem anderen Teil der Faltlinien 4 zumindest in Teilbereichen an einem inneren Mantelrohr 8 festgelegt sind. Zwischen dem äußeren Mantelrohr 7 und den Lagen 1 kann hierbei bevorzugt eine stoffschlüssige Verbindung wie beispielsweise eine Löt- und/oder eine Schweißverbindung, bevorzugt eine Hartlötverbindung ausgebildet werden. Je nach Einsatz des Wabenkörpers 6 kann die Verbindung zwischen den Lagen 1 und dem inneren Mantelrohr 8 stoffschlüssig und/oder form- und/oder kraftschlüssig ausgebildet sein. Bevorzugt kann hierbei eine lösbare Verbindung zwischen dem inneren Mantelrohr 8 und den Lagen 1 ausgebildet sein, so dass nach Herstellung des Wabenkörpers 6 das innere Mantelrohr 8 vom Wabenkörper 6 getrennt werden kann. Bevorzugt erfolgt die Herstellung des Wabenkörpers 6 durch die Verbindung zwischen den Lagen 1 und den Mantelrohren 7, 8 und ein anschließendes relatives Verdrehen der Mantelrohre 7, 8 zueinander. Besonders bevorzugt ist hierbei eine Ausgestaltung des Verfahrens, bei der das innere Mantelrohr 8 relativ zum äußeren Mantelrohr 7 gedreht wird. Dadurch entsteht ein Wabenkörper 6, der einen radialen Teilbereich 9 aufweist, welcher für ein Fluid durchströmbare Kanäle 10 umfasst.

Im vorliegenden Ausführungsbeispiel ist der radiale Teilbereich 9 ein kreisringförmiger radialer Teilbereich. Grundsätzlich handelt es sich erfindungsgemäß um einen ringförmigen Teilbereich 9, der dadurch definiert ist, dass der ringförmigen Teilbereich 9 Kanäle 10 aufweist, wobei der Teilbereich 9 außen und innen begrenzt ist, wobei in seinem Inneren ein Bereich entsteht, der grundsätzlich keine Lagen 1 und/oder Kanäle 10 aufweist. Bevorzugt verlaufen die den Teilbereich 9 innen und außen begrenzenden Linien im Wesentlichen parallel zueinander. Die Erfindung ist jedoch nicht auf einen kreisringförmigen Wabenkörper 6 beschränkt. Im vorliegenden Ausführungsbeispiel ist der im Inneren des inneren Mantelrohres 8 liegende Bereich ohne Kanäle ausgebildet, jedoch ist es auch möglich, in diesem Bereich einen weiteren Wabenkörper mit für ein Fluid durchströmbaren Kanälen einzusetzen. Der Wabenkörper 6 besteht somit aus Lagen 1, deren Abschnitte 2, 3 zumindest zum Teil im Wesentlichen eine evolventenförmige Krümmung aufweisen.

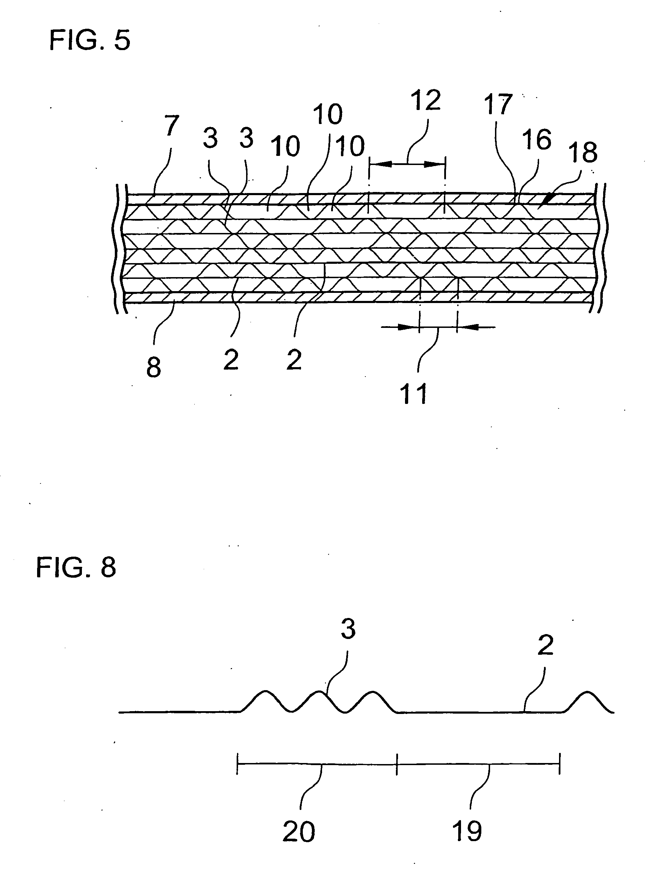

Fig. 5 zeigt beispielhaft einen weiteren Aspekt der vorliegenden Erfindung. Dieser Aspekt der Erfindung kann nicht nur in einem ringförmigen Wabenkörper 6 ausgebildet werden kann, es liegt hier vielmehr ein grundsätzlicher Vorteil vor, der in jeder Art von Wabenkörper eingesetzt werden kann, welcher aus metallischen Lagen aufgebaut ist, Fig. 5 zeigt schematisch einen Ausschnitt eines ringförmigen Wabenkörpers mit unendlichen inneren und äußeren Radien. Zu sehen ist nur eine Lage und auch diese nur in einem Ausschnitt, Faltlinien 4 werden hier nicht gezeigt. Statt einer einzigen Lage 1 mit im Wesentlichen glatten Abschnitten 2 und strukturierten Abschnitten 3 kann auch eine Mehrzahl von im Wesentlichen glatten Lagen und strukturierten Lagen ausgebildet sein. Die strukturierten Abschnitte 3 weisen eine periodische Struktur auf, die im Regelfall eine Strukturwiederhollänge 11 aufweist. Bei vollständig periodischen Strukturen entspricht die Strukturwiederhollänge 11 der Periode der periodischen Struktur. Der gezeigte Ausschnitt eines erfindungsgemäßen Wabenkörpers 6 weist Stellen auf, an denen eine vergrößerte Strukturwiederholänge 12 vorliegt. Durch diese vergrößerte Strukturwiederholänge 12 kann die Lage 1 federn und sich in den Bereichen mit der vergrößerten Strukturwiederhollänge verformen. Dadurch kann die Lage 1 Druckspannungen aufnehmen. Solche Druckspannungen entstehen beispielsweise dadurch, dass ein Wabenkörper 6 sich inhomogen aufheizt. Dies kann beispielsweise dadurch erfolgen, dass beim Einsatz als Katalysatorträgerkörper in Teilbereichen des Wabenkörpers 6 eine Anspringtemperatur der katalytischen Reaktion ("Light-off"-Temperatur) eher erreicht wird als in anderen Bereichen. Dann heizen sich die Bereiche, in denen die katalytische Umsetzung bereits abläuft, deutlich stärker als die anderen Bereiche, da die ablaufenden Reaktionen exotherm sind. Die dadurch entstehenden Druckspannungen können bei üblichen aus metallischen Lagen aufgebauten Wabenkörpern 6 zur Beschädigung, beispielsweise zum Abriss der Lagen am Mantelrohr führen, dies wird durch die Bereiche mit den vergrößerten Strukturwiederhollängen 12 vermindert.

Die Druckspannungen treten insbesondere auch in ringförmigen Wabenkörpern 6 auf. Die Lagen 1 können zumindest in Teilbereichen eine metallische Folie umfassen und können auch in anderen Teilbereichen zumindest teilweise für ein Fluid durchströmbares Material aufweisen. Insbesondere kann so ein Wabenkörper 6 hergestellt werden, der in der Richtung, in der die Kanäle 10 durchströmbar sind, zunächst aus einer metallischen Folie und dann aus einer zumindest teilweise für ein Fluid durchströmbaren Lage ausgebildet ist. Bevorzugt ist auch die Ausbildung der gesamten Lagen 1 aus einer metallischen Folie.

Eine Befestigung der Lage 1 am äußeren Mantelrohr 7 erfolgt in mindestens einem Befestigungspunkt 16. Unter einem Befestigungspunkt 16 wird hier insbesondere auch ein linienförmiger Befestigungsbereich verstanden, welcher mindestens einen Teil der Kuppe 17 der Strukturierung 18 umfasst

Fig. 5 zeigt, dass die Bereiche mit vergrößerter Strukturwiederhollänge 12 so verteilt sind, dass es im wesentlichen keinen Radius des ringförmigen Wabenkörpers 6 gibt, der keinen dieser Bereiche mit vergrößerter Strukturwiederhollänge 12 aufweist. So können auftretende Druckspannungen radial gleichförmig verteilt werden.

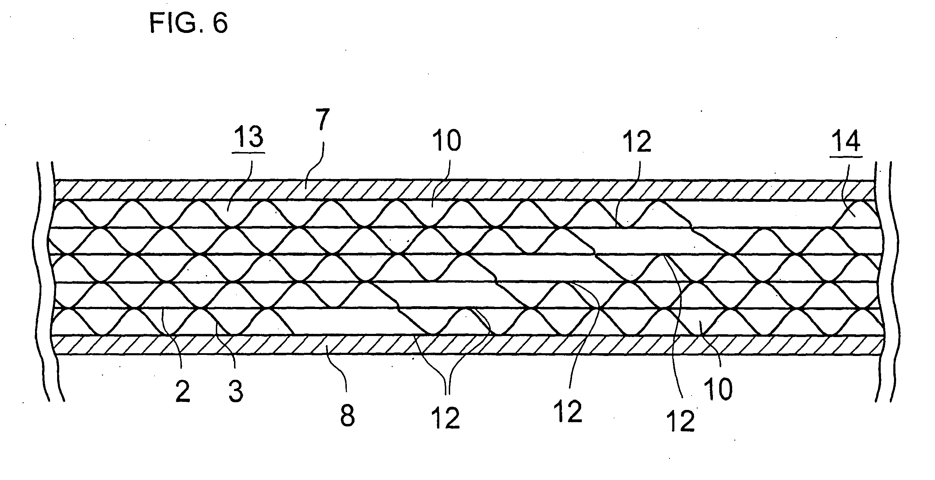

Bevorzugt kann die Ausbildung von Bereichen mit vergrößerter Shukturwiederhollänge 12 in Bereichen erfolgen, die die Randbereiche einer Lage 1 bilden, wie Fig. 6 exemplarisch zeigt. Bevorzugt können, im Randbereich eine oder mehrere Strukturen weggelassen werden, so dass sich nach Fertigstellung des Wabenkörpers dann, wenn dieser aus einer ersten Lagen 13 und einer zweiten Lage 14 aufgebaut ist, im Randbereich dieser Lagen 13, 14 Bereiche mit vergrößerter Strukturwiederhollänge 12 bilden. Auf Grund der relativen Verdrehung des inneren Mantelrohres 8 gegen das äußere Mantelrohr 7 kommt es zu einer Verteilung der Bereiche mit vergrößerter Strukturwiederhollänge 12 über den Querschnitt des Wabenkörpers 6. So wird in besonders vorteilhafter Weise eine sehr gute Auf nahme von Druckspannungen ermöglicht.

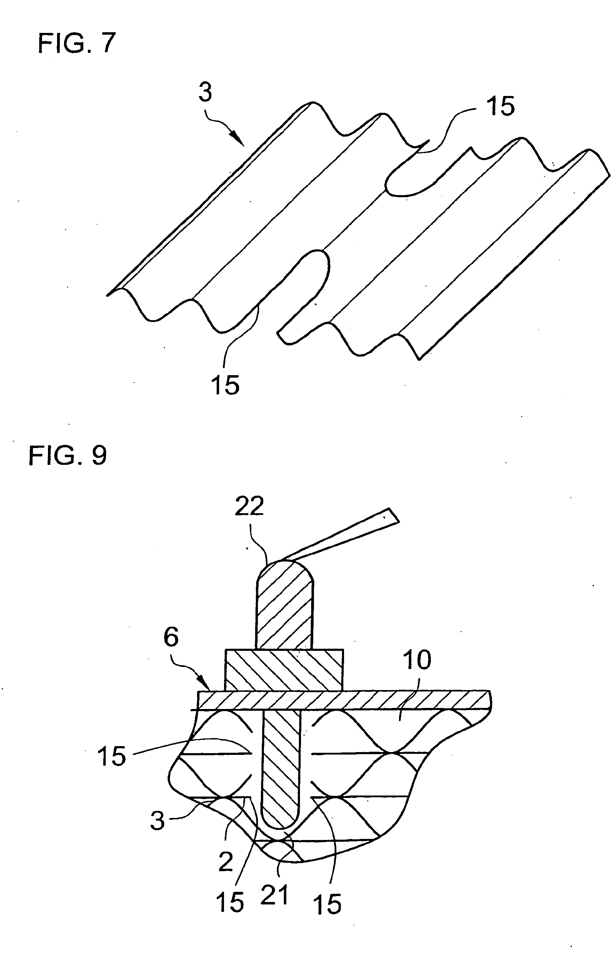

Fig. 7 zeigt schematisch einen Ausschnitt eines strukturierten Abschnitts 3 einer Lage 1 oder einer strukturierten Lage. Dieser weist zwei Ausnehmungen 15 auf, die in den Abschnitt 3 eingebracht sind. Durch diese Ausnehmungen ist die Lage 1 in der Lage, sich bei Druckspannungen zu verformen, ohne dass es zu einer Beschädigung der Lage 1 kommt. Die Ausnehmungen 15 können alternativ oder zusätzlich zu Bereichen mit vergrößerter Strulchuwiederhollänge 12 ausgebildet sein.

Fig. 8 zeigt schematisch einen Ausschnitt einer Lage 1 mit glatten 2 und strukturierten Abschnitten 3. Die glatten Abschnitte 2 weisen dabei eine erste Abschnittslänge 19 und die strukturierten Abschnitte 3 eine zweite Abschnittslänge 20 auf Erste 19 und zweite Abschnittslänge 20 sind unterschiedlich groß.

Fig. 9 zeigt schematisch einen Ausschnitt eines erfindungsgemäßen Wabenkörpers 6. Die Abschnitte 2, 3 weisen Ausnehmungen 15 auf, die einen zusammenhängenden Hohlraum 21 bilden. In diesen Hohlraum 21 ist ein Messfühler 22, bevorzugt eine Lambdasonde, eingebracht.

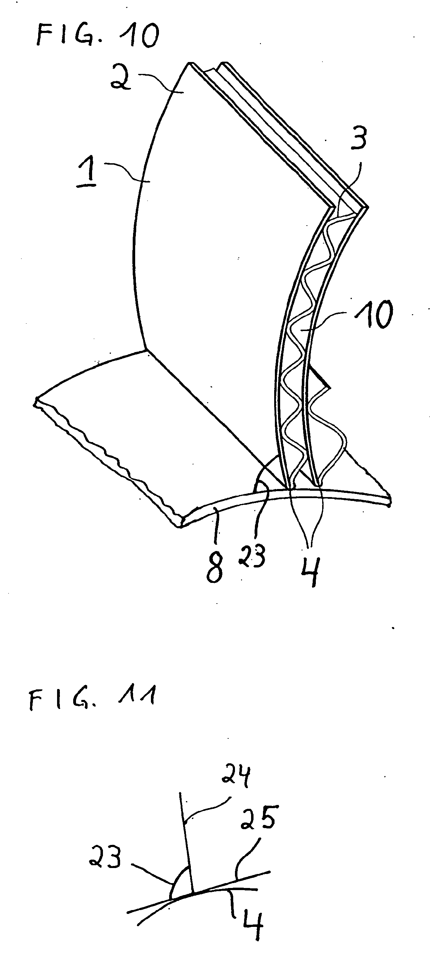

Das Ausführungsbeispiel eines Wabenkörpers 6 gemäß Fig. 10 entspricht im wesentlichen dem Ausführungsbeispiel aus Fig. 5, wobei hier auch ein inneres Mantelrohr 8 gezeigt ist, an dem die Lage 1 mit den Faltlinien 4 anliegt. Hierbei bilden die glatten Abschnitte 2 mit dem inneren Mantelrohr 8 einen Anlagewinkel 23, der insbesondere zwischen 90 und 110° beträgt. Der Anlagewinkel 23 ist insbesondere wie Fig. 11 zu entnehmen definiert als der Winkel zwischen einer ersten Tangente 24 eines glatten Abschnitts 2 im Bereich der Faltlinie 4 bzw. im Bereich der Anlage an das innere Mantelrohr 8 und einer zweiten Tangente 25 des inneren Mantelrohrs 4 in diesem Punkt.

Bevorzugt ist weiterhin eine Ausgestaltung, bei der bei Ausbildung des Wabenkörpers 6 aus einer einzigen Lage 1, die N glatte Abschnitte 2 und eine identische Zahl N strukturierte Abschnitte 3 aufweist so ist, das folgende Gleichung im wesentlichen erfüllt ist:

$$L \cdot N \cdot (W+T) = 0{,}25 \cdot \pi \, (D^2 - d^2)$$

Hierbei stellt L die Länge eines glatten Abschnitts 2, N die Anzahl er glatten Abschnitte 2, W die Wellhöhe, T die Foliendicke, D den Innendurchmesser des äußeren Mantelrohrs 7 bzw. den äußeren Durchmesser des Wabenkörpers 6- und d der Innendurchmesser des Wabenkörpers 6 bzw. den Außendurchmesser des inneren Mantelrohrs 8 dar.

Alternativ und/oder zusätzlich ist eine Ausgestaltung bevorzugt, bei der der Wabenkörper 6 aus einer einzigen Lage 1 aufgebaut wird, wobei bei einer Anzahl N von glatten 2 und strukturierten Abschnitten 3 die folgende Gleichung erfüllt ist:

$$N \cdot (W+T) = 0{,}5 \cdot (D-d),$$

wobei die Größen N, W, T, D und d wie oben definiert sind.

Das erfindungsgemäße Verfahren zur Herstellung eines Wabenkörpers 6 und der erfindungsgemäße Wabenkörper 6 erlaubt in vorteilhafter Weise die Bereitstellung eines ringförmigen Wabenkörpers 6 bei geringem Materialaufwand und guter Dauerhaltbarkeit.

Bezugszeichenliste

1  Lage
2  glatter Abschnitt
3  strukturierter Abschnitt
4  Faltlinie
5  Faltrichtung
6  Wabenkörper
7  äußeres Mantelrohr
8  inneres Mantelrohr
9  radialer Teilbereich
10  Kanal
11  Strukturwiederholänge
12  vergrößerte Strukturwiederholänge
13  erste Lage
14  zweite Lage
15  Ausnehmung
16  Befestigungspunkt
17  Kuppe
18  Strukturierung
19  erste Abschnittslänge
20  zweite Abschnittslänge
21  Hohlraum
22  Messfühler
23  Anlagewinkel
24  erste Tangente
25  zweite Tangente

**Patentansprüche**

1. Verfahren zur Herstellung eines Wabenkörpers (6), welcher einen radialen Teilbereich (9) mit für ein Fluid durchströmbaren Kanälen (10) aufweist, wobei der Teilbereich (9) ringförmig ist, wobei der Wabenkörper (6) aus einer einzigen metallischen Lage (1, 13, 14) ausgebildet wird, wobei das Verfahren zumindest die folgenden Schritte aufweist:

   - Ausbilden von im wesentlichen glatten (2) und strukturierten Abschnitten (3) der metallischen Lage (1, 13. 14), wobei die im wesentlichen glatten Abschnitte (2) mindestens eine erste Abschnittslänste (19) und die strukturierten Abschnitte (3) mindestens eine von der ersten Abschnittslänge (19) verschiedene zweite Abschnittslänge (20) aufweisen;
   - Falten der Abschnitte (2. 3) aufeinander, dass die im wesentlichen glatten (2) und strukturierten Abschnitten einander abwechseln:
   - Befestigen der einen metallischen Lage (1, 13, 14)die in mindestens einem Befestigungspunkt (16) an einem äußeren Mantelrohr (7);
   - evolventenförmiges Verwinden der Abschnitte (2, 3) in dem Mantelrohr (7).

2. Verfahren nach Anspruch 1, bei dem die eine Lage (1, 13, 14) mit einem inneren Mantelrohr (8) verbunden ist, wobei bei der Herstellung eine relative Verdrehung der Mantelrohre (7, 8) zueinander erfolgt.

3. Verfahren nach Anspruch 2, bei der die Verbindung zwischen der einen Lage (1, 13, 14) und innerem Mantelrohr (8) lösbar ist.

4. Verfahren nach Anspruch 3, bei dem nach dem Verdrehen das innere Mantelrohr (8) entfernt wird.

5. Verfahren nach einem der vorhergehenden Ansprüche, bei dem die Abschnitte (2, 3) der Lage (1, 13, 14) durch Faltlinien (4) getrennt sind, wobei jede zweite Faltlinie (4) auf einer Seite der Lage (1, 13, 14) liegt und wobei mindestens eine der letztgenannten Faltlinien (4) mindestens einen Befestigungspunkt (16) umfasst.

6. Verfahren nach einem der vorhergehenden Ansprüche, bei dem die Strukturen (18) im wesentlichen periodisch in die Lage (1, 13, 14) eingebracht werden, wobei die Strukturen (18) eine Strukturwiederhollänge (11, 12) aufweisen, wobei die Strukturwiederhollänge (12) an mindestens einer Stelle der Lage (1, 13, 14) vergrößert wird.

7. Verfahren nach einem der vorhergehenden Ansprüche, bei dem in mindestens einen strukturierten Abschnitt (3) mindestens eine Ausnehmung (15) eingebracht wird.

8. Verfahren nach Anspruch 8, bei dem Ausnehmungen (15) so in glatte (2) und strukturierte Abschnitte (3) eingebracht werden, dass nach der Faltung ein zusammenhängender Hohlraum (21) entsteht.

9. Verfahren nach einem der vorhergehenden Ansprüche, bei dem ein die Lage (1, 13, 14) begrenzender strukturierter Abschnitt (3) kürzer ausgebildet wird als die übrigen Abschnitte.

10. Verfahren nach einem der vorhergehenden Ansprüche, bei dem eine Befestigung der Lage (1, 13, 14) in den Befestigungspunkten (16) mittels eines stoffschlüssigen Verfahrens erfolgt.

11. Verfahren nach einem der vorhergehenden Ansprüche, bei dem zumindest in Teilbereichen des Wabenkörpers (6) mindestens eine der folgenden Verbindungen stoffschlüssige erzeugt wird:

   a) eine Verbindung der Lage (1, 13, 14) mit einem inneren Mantelrohr (8);
   b) eine Verbindung der Lage (1, 13, 14) mit einem äußeren Mantelrohr (7);
   c) eine Verbindung der Lage (1, 13, 14) mit sich selbst und
   d) eine Verbindung einer Lage (1, 13) mit einer benachbarten Lage (1, 14).

12. Wabenkörper (6), welcher einen radialen Teilbereich (9) mit für ein Fluid durchströmbaren Kanälen (10) aufweist, wobei der Teilbereich (9) ringförmig ist, wobei der Wabenkörper (6) mit einer einzigen metallischen Lage (1, 13, 14) ausgebildet ist, die in mindestens einem Befestigungspunkt (16) an einem äußeren Mantelrohr (7) befestigt ist, wobei die metallische Lage (1, 13, 14) im wesentlichen glatte (2) und strukturierte Abschnitte (3) aufweist, die abwechselnd aufeinander gefaltet sind, **dadurch gekennzeichnet,dass** die im wesentlichen glatten Abschnitte (2) mindestens eine erste Abschnittslänae (19) und die strukturierten Abschnitten (3) mindestens eine von der ersten Abschnittslänge (19) verschiedene zweite Abschnittslänge (20) aufweisen, und wobei jeder einzelne Abschnitt (2, 3) eine im wesentlichen evolventenförmige Krümmung aufweist.

13. Wabenkörper (6) nach Anspruch 12, bei dem die strukturierten Abschnitte (3) nur eine Strukturamplitude aufweisen.

14. Wabenkörper (6) nach Anspruch 12 oder 13, bei dem ein inneres Mantelrohr (8) ausgebildet ist, mit welchem die eine Lage (1) zumindest in Teilbereichen verbunden ist.

15. Wabenkörper (6) nach einem der Ansprüche 12 bis 14, bei dem die Abschnitte (2, 3) der Lage (1, 13, 14) durch Faltlinien (4) getrennt sind, wobei jede zweite Faltlinie (4) auf einer Seite der Lage (1, 13, 14) liegt und wobei mindestens eine der letztgenannten Faltlinien (4) zumindest in Teilbereichen mit dem äußeren Mantelrohr (7) verbunden ist.

16. Wabenkörper (6) nach einem der Ansprüche 12 bis 15, bei dem die Strukturen (18) der strukturierten Abschnitte (3) eine Strukturwiederhollänge (11, 12) aufweisen, wobei die Strukturwiederhollänge (12) an mindestens einer Stelle der Lage (1, 13, 14) vergrößert wird.

17. Wabenkörper (6) nach einem der Ansprüche 12 bis 16, bei dem mindestens ein strukturierter Abschnitt (3) mindestens eine Ausnehmung (15) aufweist.

18. Wabenkörper (6) nach Anspruch 17, bei dem glatte (2) und strukturierte Abschnitte (3) Ausnehmungen (15) aufweisen, die einen zusammenhängenden Hohlraum (21) bilden.

19. Wabenkörper (6) nach einem der Ansprüche 12 bis 18, bei dem in den Befestigungspunkten (16) eine stoffschlüssige Verbindung vorliegt.

20. Wabenkörper (6) nach einem der Ansprüche 12 bis 19, bei dem mindestens eine der folgenden Verbindungen eine stoffschlüssige Verbindung umfasst:

   a) eine Verbindung der Lage (1, 13, 14) mit einem inneren Mantelrohr (8);
   b) eine Verbindung der Lage (1, 13, 14) mit einem äußeren Mantelrohr (7);
   c) eine Verbindung der Lage (1, 13,14) mit sich selbst und
   d) eine Verbindung einer Lage (1, 13) mit einer benachbarten Lage (1, 14).

**Claims**

1. A method for producing a honeycomb body (6) which has a radial partial region (9) with ducts (10) which can be traversed by a fluid, with the partial region (9) being annular, with the honeycomb body (6) being formed from one single metallic layer (1, 13, 14) wherein the method comprises at least the following steps:

   - producing substantially smooth sections (2) and corrugated sections (3) of the metallic layer (1, 13, 14) wherein the substantially smooth sections (2) having at least one first section length (19) and the structured sections (3) having at least one second section length (20) which differs from the first section length (19);
   - folding of the sections (2, 3) on each other in such a manner that the smooth sections (2) and corrugated sections (3) are formed in an alternating fashion;
   - fastening the metallic layer (1, 13, 14) fastened at at least one fastening point (16) to an outer casing tube (7);
   - winding or twisting the sections (2, 3) within the outer casing tube (7) to an involute curvature.

2. The method as claimed in claim 1, wherein the at least one layer (1, 13, 14) is connected to an inner casing tube (8), with a relative rotation of the casing tubes (7, 8) with respect to one another taking place during production.

3. The method as claimed in claim 2, wherein the connection between the at least one layer (1, 13, 14) and the inner casing tube (8) is detachable.

4. The method as claimed in claim 3, wherein the inner casing tube (8) is removed after the rotation.

5. The method as claimed in one of the preceding claims, wherein the sections (2, 3) of the layer (1, 13, 14) are separated by fold lines (4), with every second fold line (4) being situated on one side of the layer (1, 13, 14) and with at least one of the latter fold lines (4) comprising at least one fastening point (16).

6. The method as claimed in one of the preceding claims, wherein the structures (18) are formed in the layer (1, 13, 14) in a substantially periodic manner, with the structures (18) having a structure repeat length (11, 12), with the structure repeat length (12) being increased at at least one point of the layer (1, 13, 14).

7. The method as claimed in one of the preceding claims, wherein at least one recess (15) is formed in at least one structured section (3).

8. The method as claimed in claim 8, wherein recesses (15) are formed in smooth (2) and structured sections (3) in such a way that, after the folding, a coherent cavity (21) is formed.

9. The method as claimed in one of the preceding claims, wherein a structured section (3) which delimits the layer (1, 13, 14) is of shorter design than the other sections.

10. The method as claimed in one of the preceding claims, wherein a fastening of the layer (1, 13, 14) at the fastening points (16) takes place by means of a material joining process.

11. The method as claimed in one of the preceding claims, wherein at least one of the following connections is generated in a materially joined manner at least in partial regions of the honeycomb body (6):

   a) a connection of the layer (1, 13, 14) to an inner casing tube (8);
   b) a connection of the layer (1, 13, 14) to the outer casing tube (7);
   c) a connection of the layer (1, 13, 14) to itself and
   d) a connection of a layer (1, 13) to an adjacent layer (1, 14).

**12.** A honeycomb body (6) which has a radial partial region (9) with ducts (10) which can be traversed by a fluid, wherein the partial region (9) being annular, wherein the honeycomb body (6) being formed from on single metallic layer (1, 13, 14) which is fastened at at least one fastening point (16) to an outer casing tube (7), wherein the metallic layer (1, 13, 14) having substantially smooth sections (2) and structured sections (3) which are folded onto one another, **characterized in that** the substantially smooth sections (2) having at least one first section length (19) and the structured sections (3) having at least one second section length (20) which differs from the first section length (19) wherein each section (2, 3) have a substantially involute curvature.

**13.** The honeycomb body (6) as claimed in claim 12, wherein the structured sections (2, 3) have only one structure amplitude.

**14.** The honeycomb body (6) as claimed in claim 12 or 13, wherein an inner casing tube (8) is formed, to which the layer (1) is connected at least in partial regions.

**15.** The honeycomb body (6) as claimed in one of claims 12 to 14, wherein the sections (2, 3) of the layer (1, 13, 14) are separated by fold lines (4), with every second fold line (4) being situated on one side of the layer (1, 13, 14) and with at least one of the latter fold lines (4) being connected at least in partial regions to the outer casing tube (7).

**16.** The honeycomb body (6) as claimed in one of claims 12 to 15, wherein the structures (18) of the structured sections (3) have a structure repeat length (11, 12), wherein the structure repeat length (12) being increased at at least one point of the layer (1, 13, 14).

**17.** The honeycomb body (6) as claimed in one of claims 12 to 16, wherein at least one structured section (3) has at least one recess (15).

**18.** The honeycomb body (6) as claimed in claim 17, wherein smooth (2) and structured sections (3) have recesses (15) which form a coherent cavity (21).

**19.** The honeycomb body (6) as claimed in one of claims 12 to 18, wherein a materially joined connection is present in the fastening points (16).

**20.** The honeycomb body (6) as claimed in one of claims 12 to 19, wherein at least one of the following connections comprises a materially joined connection:

a) a connection of the layer (1, 13, 14) to an inner casing tube (8);
b) a connection of the layer (1, 13, 14) to the outer casing tube (7);
c) a connection of the layer (1, 13, 14) to itself and
d) a connection of a layer (1, 13) to an adjacent layer (1, 14).

**Revendications**

**1.** Procédé destiné à la fabrication d'un corps en nids d'abeilles (6) qui a une région partielle radiale (9) avec des canaux (10) pouvant être parcourus par un fluide, la région partielle (9) étant annulaire, le corps en nids d'abeilles (6) étant réalisé d'une seule couche métallique (1, 13, 14), le procédé ayant au moins les étapes suivantes :

- réaliser des tronçons sensiblement lisses (2) et structurés (3) de la couche métallique (1, 13, 14), les tronçons sensiblement lisses (2) présentant au moins une première longueur de tronçon (19) et les tronçons structurés (3) au moins une deuxième longueur de tronçon (20) différente par rapport à la première longueur de tronçon (19) ;
- plier les tronçons (2, 3) l'un sur l'autre, de sorte que les tronçons sensiblement lisses (2) et structurés (3) s'alternent l'un avec l'autre ;
- fixer la seule couche métallique (1, 13, 14) dans au moins un point de fixation (16) sur un tube d'enveloppe extérieur (7) ;
- chantourner en forme de développante les tronçons (2, 3) dans le tube d'enveloppe (7).

**2.** Procédé selon la revendication 1, dans le cas duquel la seule couche (1, 13,14) est reliée à un tube d'enveloppe intérieur (8), dans quel cas lors de la fabrication une torsion relative des tubes d'enveloppe (7, 8) l'un par rapport à l'autre a lieu.

**3.** Procédé selon la revendication 2, dans lequel la connexion entre la seule couche (1, 13, 14) et le tube d'enveloppe intérieur (8) peut être rompue.

**4.** Procédé selon la revendication 3, dans lequel après la torsion le tube d'enveloppe intérieur (8) est éliminé.

**5.** Procédé selon l'une des revendications précédentes, dans lequel les tronçons (2, 3) de la couche (1, 13, 14) sont séparés par des lignes de plis (4), chaque deuxième ligne de plis (4) se trouvant sur un coté de la couche (1, 13, 14) et dans quel cas au moins une des lignes de plis (4) citées en dernier lieu comprend au moins un point de fixation (16).

**6.** Procédé selon l'une des revendications précédentes, dans lequel les structures (18) sont introduites sensiblement de manière périodique dans la couche (1, 13, 14), dans quel cas les structures (18) ont une longueur de répétition de structure (11, 12), la longueur de répétition de structure (12) étant agrandie dans au moins un endroit de la couche (1, 13, 14).

**7.** Procédé selon l'une des revendications précédentes, dans lequel dans au moins un tronçon structuré (3) au moins un dégagement (15) est introduit.

**8.** Procédé selon la revendication 8, dans lequel des dégagements (15) sont introduits de manière telle dans des tronçons lisses (2) et structurés (3) qu'après le pliage une cavité communicante (21) est générée.

**9.** Procédé selon l'une des revendications précédentes, dans lequel un tronçon structuré (3) limitant la couche (1, 13, 14) est réalisé de manière plus courte que les autres tronçons.

**10.** Procédé selon l'une des revendications précédentes, dans lequel une fixation de la couche (1, 13, 14) est effectuée dans les points de fixation (16) au moyen d'un procédé de coopération de matériaux.

**11.** Procédé selon l'une des revendications précédentes, dans lequel, au moins dans des régions partielles du corps en nids d'abeilles (6) au moins une des connexions suivantes est générée par coopération de matériaux :

   a) une connexion de la couche (1, 13, 14) avec un tube d'enveloppe intérieur (8);
   b) une connexion de la couche (1, 13, 14) avec un tube d'enveloppe extérieur (7) ;
   c) une connexion de la couche (1, 13, 14) avec elle-même et
   d) une connexion d'une couche (1, 13) avec une couche adjacente (1, 14).

**12.** Corps en nids d'abeilles (6), qui a une région partielle radiale (9) avec des canaux (10) pouvant être parcourus par un fluide, la région partielle (9) étant annulaire, le corps en nids d'abeilles (6) étant réalisé avec une seule couche métallique (1, 13, 14) qui est fixée dans au moins un point de fixation (16) sur un tube d'enveloppe extérieur (7), la couche métallique (1, 13, 14) présentant sensiblement des tronçons lisses (2) et structurés (3), qui sont pliés en alternance les uns sur les autres, **caractérisé en ce que** les tronçons sensiblement lisses (2) ont au moins une première longueur de tronçon (19) et les tronçons structurés (3) au moins une deuxième longueur de tronçon (20) qui est différente par rapport à la première longueur de tronçon (19) et chaque tronçon individuel (2, 3) ayant une courbure sensiblement en forme de développante.

**13.** Corps en nids d'abeilles (6) selon la revendication 12, dans le cas duquel les tronçons structurés (3) n'ont qu'une amplitude structurelle.

**14.** Corps en nids d'abeilles (6) selon la revendication (12) ou 13, dans le cas duquel un tube d'enveloppe intérieur (8) est réalisé, avec lequel la seule couche (1) est connectée au moins dans des régions partielles.

**15.** Corps en nids d'abeilles (6) selon l'une des revendications 12 à 14, dans le cas duquel les tronçons (2, 3) de la couche (1, 13, 14) sont séparés par des lignes de plis (4), chaque deuxième ligne de plis (4) se trouvant sur un coté de la couche (1, 13, 14) et au moins une des lignes de plis (4) citées en dernier lieu est connectée au tube d'enveloppe (7) extérieur au moins dans des régions partielles.

**16.** Corps en nids d'abeilles (6) selon l'une des revendications 12 à 15, dans le cas duquel les structures (18) des tronçons structurés (3) ont une longueur de répétition de structure (11, 12), la longueur de répétition de structure (12) étant agrandie dans au moins un endroit de la couche (1, 13, 14).

**17.** Corps en nids d'abeilles (6) selon l'une des revendications 12 à 16, dans le cas duquel au moins un tronçon structuré (3) a au moins un évidement (15).

**18.** Corps en nids d'abeilles (6) selon la revendication 17, dans le cas duquel des tronçons lisses (2) et structurés (3) ont des évidements (15) qui forment une cavité communicante (21).

**19.** Corps en nids d'abeilles (6) selon l'une des revendications 12 à 18, dans le cas duquel il existe une connexion par coopération de matériaux dans les points de fixation (16).

**20.** Corps en nids d'abeilles (6) selon l'une des revendications 12 à 19, dans le cas duquel au moins une des connexions suivantes comprend une connexion par coopération de matériaux :

    a) une connexion de la couche (1, 13, 14) avec un tube d'enveloppe intérieur (8) ;
    b) une connexion de la couche (1, 13, 14) avec un tube d'enveloppe extérieur (7) ;
    c) une connexion de la couche (1, 13, 14) avec elle-même et
    d) une connexion d'une couche (1, 13) avec une couche adjacente (1, 14).

FIG. 1

EP 1 922 148 B1

FIG.2

FIG. 3

FIG. 4

FIG. 6

EP 1 922 148 B1

## FIG. 5

## FIG. 8

**FIG. 7**

**FIG. 9**

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0245736 A
- EP 0322566 A
- DE 2321378 A
- WO 9401661 A
- DE 2452929 A